# FASCICULE DE BREVET EUROPEEN

(11) **EP 3 027 979 B1**
(45) Date de publication et mention de la délivrance du brevet: **09.09.2020**
(21) Numéro de dépôt: 14748243.4
(22) Date de dépôt: 08.07.2014
(51) Int. Cl.: F25B 17/08, F25B 35/04, F25B 37/00

(54) **REACTEUR THERMOCHIMIQUE COMPACT À TRANSFERTS ET MAINTENANCE OPTIMISÉS**
KOMPAKTER THERMOCHEMISCHER REAKTOR MIT OPTIMIERTER TRANSFERLEISTUNG UND WARTUNG
COMPACT THERMOCHEMICAL REACTOR WITH OPTIMISED TRANSFERS AND MAINTENANCE

(30) Priorité: 01.08.2013 FR 1357626
(43) Date de publication de la demande: 08.06.2016
(73) Titulaire: COLDINNOV, 31300 Toulouse (FR)
(72) Inventeur: BATAILLE, Lionel, F-31770 Colomiers (FR); JUILLARD, Jean-Louis, F-21510 Aignay Le Duc (FR)
(74) Mandataire: Ipside
(86) Numéro de dépôt international: PCT/FR2014/051749
(87) Numéro de publication internationale: WO 2015/015079

(56) Documents cités:
- EP-A1- 1 621 828
- WO-A1-98/41801

## Description

La présente invention appartient au domaine des appareils de transfert et de stockage de l'énergie thermique et plus particulièrement à celui des réacteurs thermochimiques équipant de tels appareils.

Elle a pour objet un appareil de chauffage et/ou de refroidissement d'un compartiment, mettant à profit les phases alternées d'absorption et de dégagement de chaleur d'un système chimique contenu dans un réacteur du fait de ses changements d'état, le réacteur ayant une structure aisément démontable et favorisant les échanges thermiques.

Il est connu d'utiliser des systèmes thermochimiques pour la production de froid et/ou de chaleur. Ces systèmes sont fondés sur les variations thermiques résultant de transformations physico-chimiques d'un couple de composés aptes à interagir l'un avec l'autre. Typiquement l'un des composés est un fluide, et l'autre composé est formé de sels réactifs s'associant avec le fluide quand ils sont mis en contact à une température donnée, mais se dissociant lorsque la température augmente.

Le fluide peut être gazeux ou liquide selon les conditions de température et de pression auxquelles il est soumis. Dans les systèmes qui nous intéressent, il est conservé à l'état liquide dans un réservoir qui est séparé par une vanne du réacteur contenant les sels réactifs. A l'ouverture de la vanne, le fluide subit une expansion au cours de laquelle il se vaporise et va réagir chimiquement avec les sels. Le changement d'état du fluide (de liquide à gazeux) consomme de l'énergie et induit par conséquent une baisse de température au niveau du réservoir. Au contraire, la réaction chimique entre le gaz et les sels est exothermique et provoque un dégagement de chaleur au niveau du réacteur. A l'équilibre, après vaporisation totale du fluide ou lorsque les sels sont saturés, la réaction chimique s'arrête ainsi que la production de froid et de chaleur.

Il est ensuite possible de régénérer le système en chauffant les sels réactifs, ce qui provoque la séparation des sels et du gaz. De ce fait, on observe une montée de la pression dans le système et une condensation du gaz qui se retrouve à l'état liquide dans le réservoir. Les sels ainsi régénérés sont aptes à réagir dans un nouveau cycle de réfrigération - chauffage.

On sait mettre à profit les phases alternées de production et d'absorption de chaleur d'un tel système, selon les besoins pour chauffer ou refroidir un compartiment auquel on l'associe par l'intermédiaire d'un dispositif thermiquement conducteur (caloduc).

Un tel procédé est connu par exemple par le document FR 2 873 793, qui décrit le couplage d'un processus de transition de phase d'un fluide tel que l'ammoniac NH3 (par évaporation et condensation), et d'une réaction chimique fortement exothermique d'absorption du fluide gazeux par un solide réactif tel que des sels et notamment du chlorure de calcium CaCl₂ ou du chlorure de baryum BaCl₂ ... Point essentiel, cette réaction est réversible et permet par chauffage de régénérer les sels et de récupérer le gaz initial (désorption du gaz).

On connait également du document WO 98/41801 A1, un système de réfrigération comprenant un réacteur dans lequel sont introduits ensemble un composé absorbeur et un composé absorbé. Le réacteur comprend une enceinte métallique tubulaire, fermée à ses extrémités par des bouchons scellés. Il est équipé d'un applicateur de micro-ondes coaxial. En plus, le document WO 98/41801 A1 dévoile un appareil selon le préambule de la revendication 1.

Le fonctionnement intrinsèquement discontinu et cyclique du procédé thermochimique est bien adapté aux fonctions de transformation et de stockage d'une énergie intermittente et récurrente telle que l'énergie solaire captée par des capteurs thermiques plans ou à tubes. Dans ce cas, le procédé est appliqué classiquement selon deux phases réactionnelles principales réalisées sous des contraintes thermodynamiques différentes : une phase diurne de régénération des sels réactifs par désorption et de stockage de l'énergie produite, suivie d'une phase nocturne de production de froid.

Au cours de la phase diurne, l'énergie délivrée par les capteurs solaires est utilisée pour chauffer le réacteur et décomposer le réactif solide qui libère le gaz réfrigérant lequel se condense alors dans un condenseur maintenu à la température ambiante extérieure. Lorsque qu'il y a un surplus d'énergie solaire, celle-ci peut être stockée par exemple dans un matériau à changement de phase pour être utilisée ultérieurement par exemple pour un chauffage plus rapide du réacteur le matin suivant, ou pour un autre usage tel qu'une production d'eau chaude.

La phase nocturne de production de froid consiste à refroidir en fin de journée le réacteur pour qu'il réabsorbe chimiquement le gaz provenant de l'évaporation du fluide dans le réservoir et produisant ainsi le froid. Le froid produit au niveau du réservoir peut être utilisé directement pour refroidir le compartiment d'un milieu donné, et la chaleur produite dans le réacteur par la réaction exothermique peut être aussi utilisée directement pour chauffer un compartiment d'un milieu donné. Ces énergies (froides ou chaudes) peuvent également être stockées dans des matériaux à changement de phase pour être délivrées ultérieurement selon la demande.

Différentes expérimentations ont permis d'évaluer le rendement de captation solaire à environ 50% et un coefficient de performance du procédé (COP selon l'acronyme anglo-saxon) de 40%, signifiant qu'environ 20% de l'énergie solaire incidente peut être directement transformée en froid par un tel dispositif thermochimique. A noter qu'on peut utiliser d'autres sources de chaleur que l'énergie solaire pour la phase de régénération, par exemple la géothermie profonde ou la chaleur fatale issue de processus industriels, de centrales électriques ou de gaz d'échappement de moteurs thermiques. Dans ce cas, les études conduisent à estimer un rendement global de l'ordre de 35 à 40%.

On comprend donc l'intérêt pratique et économique que peut revêtir un tel système pour l'approvisionnement en énergie de zones isolées ou mal reliées aux réseaux de distribution d'électricité, mais aussi pour l'optimisation des consommations énergétiques.

La mise en œuvre du système ainsi défini nécessite cependant un équipement adapté. En effet, la réaction thermochimique met en jeu de fortes pressions, ce qui impose que les réacteurs doivent posséder une résistance mécanique élevée pour répondre aux contraintes de la réaction. Ils doivent assurer une étanchéité parfaite aux gaz comme aux liquides et résister en outre à la corrosion des composés mis en œuvre. C'est pourquoi, ils sont généralement réalisés dans des matériaux résistants tels que l'acier, et particulièrement l'acier inoxydable, ou en matériaux composites.

Pour les mêmes raisons, les réacteurs connus jusqu'à présent sont de forme générale cylindrique et sont fermés à chacune de leurs extrémités par une paroi fixe soudée au corps cylindrique ou formée d'un seul tenant avec celui-ci. Ils sont munis de moyens de diffusion des gaz mettant en communication le milieu réactif avec le réservoir contenant le fluide et permettant la circulation du gaz dans un sens ou dans l'autre selon la phase réactionnelle. Ils sont également dotés de moyens de chauffage du milieu réactif, qui seront mis en fonctionnement pour désorber le gaz et régénérer les sels réactifs. Par ailleurs, les réacteurs sont généralement munis d'un système de ventilation destiné à assurer le refroidissement rapide du milieu réactif en fin de phase de régénération.

Du fait de la forme cylindrique des réacteurs, ces différents moyens ainsi que les accessoires connexes permettant de réaliser les fonctions d'alimentation et de circulation des gaz, de filtrage, de refroidissement et de chauffage ..., sont avantageusement disposés dans un fourreau lui aussi cylindrique placé au centre du réacteur suivant son axe longitudinal (ou parfois dans plusieurs fourreaux disposés autour d'un fourreau central). De manière alternative, les éléments chauffants peuvent être disposés en colliers autour du réacteur, mais dans ce cas, le caractère isolant des matériaux de structure, des aciers en particulier, représente un obstacle au transfert thermique.

Le document FR 2 966 572 par exemple, décrit un réacteur en forme de tube dont les extrémités sont fermées par des parois hémisphériques ou hémi-ellipsoïdes (géométrie intégrée dans le cas d'un réacteur en matériau composite ou à fonds bombés soudés dans le cas d'un réacteur en acier). Le chauffage des réactifs dans la phase de régénération est assuré par une résistance électrique (de type thermoplongeur par exemple) placée dans un fourreau au cœur du corps cylindrique. Le passage des tubulures et des divers moyens de liaison indispensables à la réalisation des fonctions connexes est assuré par des orifices pratiqués dans les parois d'extrémité, équipés de dispositifs étanches par soudure ou par vissage.

Un agencement de ce type est bien adapté lorsque l'on recourt à des moyens de chauffage électriques du réacteur, que ce soit par résistance de type thermoplongeur ou par collier chauffant. Il présente cependant de nombreux inconvénients.

Un premier inconvénient découle de la difficulté de maintenance de ces systèmes, en particulier lorsqu'il est nécessaire d'accéder à l'intérieur du réacteur. En effet, le réacteur étant obturé par soudure ou ne pouvant comporter que des orifices de dimensions très réduites, comme exposé dans FR 2 966 574, l'accès aux organes intérieurs de l'enceinte et au milieu réactif nécessite une découpe du réacteur, ce qui constitue forcément une intervention lourde impliquant des moyens de haute technicité. De même, la réalisation des liaisons étanches et résistantes aux contraintes mécaniques, thermiques, chimiques,... entre les réacteurs et les divers dispositifs de chauffage, filtrage, communication en gaz,... sont des opérations complexes et onéreuses, qu'il est souhaitable d'éviter autant que possible.

Cependant, il n'est guère réaliste d'espérer pouvoir s'exonérer d'une maintenance régulière, du fait d'une part de la nature du milieu réactif et d'autre part des contraintes fortes que subissent les organes du réacteur et le réacteur lui-même, entraînant forcément une dégradation régulière.

En effet, le milieu réactif présent dans le réacteur est communément constitué d'une matrice en graphite naturel expansé (GNE) dans laquelle le sel réactif est inséré avant compression. Ce milieu réactif composite libère des particules qui peuvent être aspirées lors de la mise en communication du réacteur avec le réservoir. Pour éviter l'obturation du circuit de transfert, les réacteurs doivent être dotés de moyens de filtrage, mais ceux-ci sont à leur tour sujets à colmatage. Or, leur remplacement implique l'ouverture du corps étanche du réacteur, et surtout sa fermeture après décolmatage ou remplacement des pièces, ce qui est une opération délicate et complexe.

Par ailleurs, la réaction thermochimique étant réversible, les phases successives d'absorption et de désorption du gaz provoquent une alternance d'expansion et rétraction de la matrice poreuse composite qui, à la longue, entraîne des phénomènes de colmatage et de compactage du milieu réactif. Le seule solution est alors de remplacer le milieu réactif, ce qui impose aussi l'ouverture du réacteur.

Un autre inconvénient des systèmes connus provient de l'architecture cylindrique des réacteurs dans lesquels le ratio longueur / diamètre est de l'ordre de 4 à 5, limitant de ce fait les surfaces de contact et d'échange thermique avec le milieu réactif. Ceci n'est évidemment pas optimum du point de vue de la maîtrise des processus d'absorption et de désorption du fluide.

L'analyse des systèmes thermochimiques montre en effet qu'il existe une relation directe entre la température et la pression d'équilibre de la réaction d'une part, et entre les états d'équilibre liquide / gaz d'autre part. Aussi, est-il particulièrement souhaitable d'assurer un chauffage homogène et régulier du milieu réactif et de l'enceinte du réacteur lors de la phase de régénération. Il est également important qu'un refroidissement homogène, régulier et néanmoins rapide, du milieu réactif et de l'enceinte du réacteur puisse être obtenu en fin de phase de régénération, car à la fin de cette phase à température élevée, doit démarrer la phase de production de froid, laquelle sera d'autant plus efficace qu'elle est réalisée à faible température. A ce besoin de refroidissement à la fin de la régénération, s'ajoute un besoin de refroidissement pendant la phase d'absorption, ceci pour déplacer le point d'équilibre de la réaction.

Dans les systèmes conventionnels, la fonction de refroidissement est généralement assurée par un système de ventilation électrique qui ne permet qu'un rafraîchissement limité et ponctuel, et introduit en outre une pièce tournante dans le dispositif, pièce sensible qui peut poser des problèmes, à plus forte raison en environnement difficile. Cette solution n'est donc pas satisfaisante.

Pour répondre à ce problème, il a été proposé d'augmenter le ratio longueur / diamètre du réacteur. Ceci permet une meilleure diffusion du gaz dans la matrice réactive, d'autant que pour un milieu réactif composite à base de GNE et de sels, les transferts massiques (en gaz) et thermiques (refroidissement du milieu réactif en phase d'absorption et de chauffage en phase de régénération) s'effectuent de manière privilégiée selon une orientation radiale et non longitudinale. Ce phénomène bien connu s'explique par la structure en feuillets du graphite qui est responsable de l'anisotropie de toutes les propriétés physiques du graphite. En particulier sa conductivité thermique est très différente dans le plan des feuillets et dans la direction perpendiculaire. Suivant le procédé industriel le plus couramment utilisé, lors de la fabrication de la matrice composite graphite / sels, un mélange de granulat de GNE et de sels est comprimé dans un moule cylindrique, ce qui oriente les feuillets de graphite selon un plan perpendiculaire au sens de la compression, les sels réactifs venant s'intercaler dans l'espace laissé entre eux. Les couches ainsi formées dans le milieu réactif se retrouvent ainsi orientées selon des plans perpendiculaires à l'axe longitudinal du réacteur, ce qui va favoriser la conductivité thermique radiale.

L'augmentation de la longueur des réacteurs cylindriques répond à ces critères, mais en revanche, elle entraîne un impact négatif sur la compacité du réacteur. On peut certes associer plusieurs réacteurs plus courts pour limiter l'encombrement tout en conservant la puissance voulue du système total, mais multiplier les réacteurs multiplie aussi les coût d'équipement ainsi que les opérations d'entretien.

La présente invention a pour but de remédier à ces inconvénients en proposant un système thermochimique dont la fabrication et le fonctionnement soient facilités tout en offrant des performances égales, sinon supérieures aux systèmes connus à ce jour. En particulier, un objectif de l'invention est d'offrir un réacteur avec ses composants connexes ayant une architecture telle que les opérations de fabrication, de montage et de maintenance soient facilitées. Un autre objectif de l'invention est en particulier de permettre un démontage rapide et une accessibilité aisée à l'ensemble des composants internes.

Pour répondre à ces objectifs a été conçu un appareil selon la revendication 1 dans lequel l'enceinte du réacteur qui renferme le milieu réactif est formée de deux corps assemblés par une bride périphérique, dont le premier au moins adopte la forme générale d'une calotte de section droite circulaire ou quasiment circulaire. On a donc un réacteur sphérique (ou hémisphérique) dont l'enceinte est formée par l'assemblage de deux corps grâce à une bride périphérique. Il est de ce fait aisé à démonter et à remonter. Il peut en outre être dimensionné pour de grandes puissances d'échange thermique, compte tenu de sa géométrie favorisant une répartition homogène des contraintes.

Plus précisément, la présente invention a pour objet un appareil de chauffage et/ou refroidissement d'un milieu contenu dans un compartiment extérieur audit appareil, comprenant i) un réacteur, ii) un réservoir contenant un fluide liquide ou gazeux apte à changer d'état dans une gamme déterminée de températures et de pressions, et iii) des moyens de circulation du fluide gazeux entre le réacteur et le réservoir,
ledit réacteur comprenant :
- une enveloppe rigide définissant une enceinte qui renferme un milieu réactif apte à absorber et désorber ledit fluide à l'état gazeux par une réaction thermochimique,
- des moyens de diffusion dudit fluide gazeux dans et depuis ledit milieu réactif,
- des moyens de transfert thermique entre ledit milieu réactif et ledit milieu extérieur,
l'appareil étant caractérisé en ce que l'enveloppe du réacteur est formée de deux corps assemblés par une bride périphérique, dont le premier au moins adopte la forme générale d'une calotte de section droite circulaire ou quasiment circulaire qui contient ledit milieu réactif sous la forme d'au moins un bloc épousant la forme générale de ladite calotte.

La structure générale de l'appareil selon l'invention peut être celle des appareils connus.

En particulier, le réservoir contenant un fluide apte à changer d'état dans la gamme de températures et de pressions de fonctionnement de l'appareil peut être judicieusement choisi ou conçu par l'homme du métier. Le fluide est souvent appelé fluide réfrigérant, dans la mesure où c'est la phase d'expansion où il consomme de l'énergie qui est mise à profit en premier lieu dans l'appareil selon l'invention (mais aussi dans d'autres dispositifs tels que les réfrigérateurs). De même les moyens de circulations du fluide gazeux entre le réacteur et le réservoir peuvent être réalisés, sauf indication différente dans le cadre de l'invention, par des techniques conventionnelles dont la description se trouve si besoin dans la littérature spécialisée.

Le compartiment auquel s'applique l'appareil objet de l'invention est qualifié d'extérieur en ce qu'il est distinct de l'appareil lui-même, bien que pouvant y être accolé ou bien être monté à distance. Il peut s'agir par exemple d'un conteneur ayant pour vocation de stocker et de conserver des produits à une température déterminée, ou au moins dans un intervalle de températures étroit, alors la température de l'environnement oscille avec une forte amplitude. On désigne aussi sous le vocable de compartiment extérieur, une pièce ou un bâtiment contenant un milieu atmosphérique que l'on souhaite tempérer (rafraîchir ou réchauffer selon les cas) à l'aide d'un dispositif climatiseur. L'appareil objet de l'invention peut ainsi être utilisé pour chauffer ou pour refroidir un milieu contenu dans un compartiment extérieur, avec une action immédiate ou différée.

Dans le réacteur selon l'invention, au moins un des deux corps associés pour en constituer l'enveloppe adopte la forme générale d'une calotte de section droite circulaire ou quasiment circulaire. La section droite de la calotte est dite circulaire lorsque la section passant par le sommet de ladite calotte et perpendiculaire au plan de sa base, dessine un arc de cercle. Elle est dite quasiment circulaire lorsqu'elle dessine un arc d'ovale, une ellipse ou une anse de panier. Dans les deux cas, on privilégie les formes présentant une symétrie de révolution, pour des raisons de répartition homogène des efforts. On note par ailleurs que la section droite de la calotte peut avantageusement dessiner un demi cercle, ce qui conduit alors à une calotte de forme hémisphérique, dont la base définit le plan dit "équatorial" du réacteur.

Par soucis de clarté et de simplicité, on se réfèrera dans la suite de la présente description à des calottes hémisphériques, bien qu'il soit entendu que les formes voisines ci-dessus définies sont expressément incluses dans la présente invention.

Dans le cas de l'assemblage de deux corps adoptant la forme de calottes, on réalise un réacteur ayant une enveloppe sphérique. Lorsque l'on utilise un seul corps adoptant la forme d'une calotte, on l'associera de préférence avec un second corps plan, pour réaliser une enveloppe hémisphérique. L'enveloppe du réacteur présente de ce fait une résistance mécanique optimisée pour répondre aux contraintes de la réaction thermochimique qui met en jeu des pressions élevées. Elle est généralement réalisées en acier, en acier inoxydable ou en matériau composite.

L'enveloppe du réacteur est ainsi constituée de deux corps assemblés, le ou les corps en forme de calotte contenant le milieu réactif sous la forme d'un bloc épousant la forme générale de ladite calotte. Ce bloc peut être fait d'un seul tenant ou en plusieurs blocs de plus petite taille, mais quoi qu'il en soit, c'est un élément solide, préalablement modelé à l'espace qui lui est réservé dans le corps du réacteur. Il épouse la forme générale de ladite calotte sans y être totalement imbriqué, de façon à laisser la place pour que les phénomènes de dilatation puissent se produire au cours du fonctionnement du réacteur.

Il est ainsi aisé de placer un ou plusieurs blocs à l'intérieur de la calotte avant d'assembler l'enveloppe du réacteur. Il est également aisé de les retirer lorsque l'on sépare les deux corps de l'enveloppe, pour les remplacer ou pour procéder à l'entretien du réacteur.

Les deux corps de l'enveloppe sont assemblés par une bride, celle-ci étant munie de moyens de serrage (tels que des orifices pour assemblage boulonné...) et d'étanchéité, par exemple un joint en élastomère EPDM (éthylène-propylène-diène monomère), en graphite, ou en tout autre matériau compatible avec les réactifs mis en oeuvre. La bride peut être indépendante des deux corps de l'enveloppe. Elle peut par exemple venir enserrer les deux corps, lesquels sont alors avantageusement munis de moyens de positionnement de ladite bride.

Elle peut au contraire être partie intégrante des corps de l'enveloppe du réacteur, auquel cas, selon une caractéristique avantageuse de l'appareil objet de l'invention, le premier et le second corps comportent respectivement un premier et un second collets périphériques s'étendant selon un plan équatorial pour constituer les mâchoires de la bride qui sont assemblées par des moyens de serrage réversibles, tels qu'un ensemble boulon et écrou.

L'enveloppe du réacteur qui est impérativement étanche, doit cependant permettre la circulation du fluide gazeux entre le réservoir et le réacteur, par un conduit d'amenée débouchant dans l'enceinte du réacteur, au voisinage du bloc de milieu réactif. Elle doit également prévoir le passage d'un conduit des moyens de transfert thermique vers le milieu extérieur.

Selon un mode de réalisation intéressant de l'appareil objet de l'invention, les moyens de circulation du fluide gazeux entre le réservoir et le réacteur comprennent un conduit de communication pénétrant dans l'enceinte entre le premier et le second collets, lesquels sont maintenus à distance par des lèvres d'entretoise coopérant avec les moyens de serrage.

Dans un mode de réalisation également intéressant de l'appareil selon l'invention, les moyens de transfert thermique entre le milieu réactif et le milieu extérieur, comprennent un conduit pénétrant dans l'enceinte entre le premier et le second collets, lesquels sont maintenus à distance par des lèvres d'entretoises coopérant avec les moyens de serrage.

Les lèvres d'entretoise peuvent être usinées à la base du corps hémisphérique pour assurer une jonction étanche des deux corps de l'enveloppe dans le plan équatorial (ou au voisinage de celui-ci). Elles présentent ses orifices dotés de joints étanches, nécessaires au passage des conduits de communication et de transfert thermique.

Dans un mode de réalisation différent de l'invention, les divers conduits ne pénètrent pas dans l'enceinte du réacteur par la zone équatoriale de jonction des deux corps, mais en différents points à travers l'enveloppe. Dans ce cas, dans la mesure où il est avantageux d'accroître les surfaces d'échange (chimique et thermique) au sein du réacteur, il est envisagé que plusieurs conduits pénètrent dans le réacteur.

Ainsi, selon un mode particulier de réalisation de l'appareil objet de l'invention, les moyens de circulation du fluide gazeux entre le réservoir et le réacteur comprennent un conduit de communication se divisant en une pluralité de tubes de communication, et les moyens de transfert thermique entre le milieu réactif et le milieu extérieur comprennent un conduit de transfert thermique se divisant en une pluralité de tubes de transfert thermique, lesdits tubes pénétrant dans l'enceinte à travers l'enveloppe du réacteur en différents endroits et s'étendant selon différents axes à l'intérieur dudit au moins un bloc de milieu réactif. Le bloc réactif est percé de canaux agencés pour recevoir lesdits tubes de communication et de transfert thermique. Il est recommandé que les axes de pénétration de ces tubes soient parallèles entre eux, de sorte que lorsqu'on assemble ou qu'on démonte le système, ils puissent tous être engagés ou dégagés par simple translation selon les axes desdits canaux.

Les tubes de communication pénétrant dans le bloc de milieu réactif sont avantageusement perforés pour jouer le rôle de moyens de diffusion du fluide gazeux dans et depuis le milieu réactif. On réalise des perforations micrométriques, de manière à répartir (et à récupérer) au mieux le gaz, tout en retenant les particules qui peuvent se détacher du bloc réactif.

Comme expliqué précédemment, l'enveloppe du réacteur est formée de deux corps dont le premier au moins adopte la forme générale d'une calotte de section droite circulaire ou quasiment circulaire. Lorsque l'enveloppe comporte un seul corps en forme de calotte, le second corps est de préférence plan. Ainsi, selon une caractéristique optionnelle de l'appareil objet de l'invention, l'enveloppe du réacteur est formée de deux corps assemblés par une bride périphérique, le premier corps adoptant la forme générale d'une calotte de section droite circulaire ou quasiment circulaire, et le second corps étant sous la forme d'une platine circulaire s'ajustant au premier corps, le réacteur contenant un milieu réactif formé d'au moins un bloc épousant ladite forme générale en calotte. Avantageusement, la platine a un diamètre identique au diamètre de la base de la calotte, de sorte qu'elle ferme le premier corps. L'hémisphère ainsi constitué contient un bloc (d'un seul tenant ou en plusieurs pièces) de milieu réactif, lui-même globalement hémisphérique.

Selon une variante d'exécution préférée de l'appareil objet de l'invention, l'enveloppe du réacteur est formée de deux corps assemblés par une bride périphérique, le premier corps et le second corps adoptant chacun la forme générale d'une calotte de section droite circulaire ou quasiment circulaire s'ajustant l'une à l'autre et contenant un milieu réactif formé d'au moins deux blocs épousant chacun ladite forme générale en calotte. Avantageusement, les deux calottes ont un diamètre identique, de sorte qu'elles se ferment l'une sur l'autre, éventuellement avec une entretoise intercalée. La sphère ainsi constituée contient deux blocs de milieu réactif (d'un seul tenant ou en plusieurs pièces), chacun globalement hémisphérique.

Dans ce mode de réalisation, il est avantageux que des moyens de diffusion du fluide gazeux soient placés en partie équatoriale au niveau du conduit de communication avec le réservoir de fluide, et à l'interface des deux blocs de milieu réactif. C'est pourquoi, selon une caractéristique préférée de l'invention, les moyens de diffusion du fluide gazeux comprennent deux plaques perforées s'étendant dans le plan équatorial desdits corps en forme de calotte et séparant les blocs réactifs de chacun desdits corps du réacteur, les plaques perforées étant fixées à distance l'une de l'autre de manière à ménager entre elles une chambre intermédiaire de diffusion.

La distance séparant les deux plaques peut être par exemple au moins égale à la hauteur des lèvres d'entretoise. Les plaques peuvent comporter des micro-perforations pour réaliser les moyens de diffusion du gaz vers le bloc réactif, et de rétention des particules libérées, risquant de provoquer le colmatage du système.

Selon une caractéristique avantageuse de l'invention, les plaques perforées de la chambre intermédiaire comportent une pluralité de tubes perforés eux aussi, qui s'étendant à l'intérieur desdits blocs de milieu réactif. De préférence, ils s'étendent à intervalles réguliers à l'intérieur desdits blocs de milieu réactif et selon une orientation perpendiculaire au plan équatorial du réacteur. On démultiplie ainsi les échanges chimiques entre le gaz et les sels réactifs, en permettant un montage du réacteur par simple translation des organes. Pour les raisons déjà indiquées, les tubes sont percés de perforations micrométriques.

Selon une autre caractéristique avantageuse de l'invention, les plaques perforées comportent une zone incurvée formant une cavité centrale dans la chambre intermédiaire. Cette cavité centrale, qui accroît le volume de la chambre intermédiaire, est de préférence sensiblement sphérique. On obtient alors une concentricité avec la calotte, ce qui permet de loger un milieu réactif ayant une épaisseur constante dans l'enceinte. Ceci représente un avantage pour l'optimisation de l'homogénéité du transfert thermique, mais aussi pour la mise en œuvre du milieu réactif sous forme de blocs amovibles.

La chambre intermédiaire ainsi créée entre les deux plaques peut être avantageusement utilisée pour y faire passer et disposer aussi les moyens de chauffage et de refroidissement du réacteur (les moyens de transfert thermique). On a vu que les moyens de transfert thermique peuvent comprendre un conduit pénétrant dans l'enceinte entre le premier et le second collets de la bride. On tire partie de cette caractéristique pour prolonger ce conduit de transfert thermique dans la chambre intermédiaire. Là, il peut se diviser en plusieurs tubules plongeant dans le bloc réactif (après avoir traversé l'une ou l'autre des plaques), de manière à démultiplier les surfaces d'échange avec le milieu réactif. Les moyens de transfert thermique dont est doté l'appareil selon l'invention comportent ainsi de préférence une pluralité de tubules qui s'étendant par des orifices pratiqués dans lesdites plaques perforées à l'intérieur desdits blocs de milieu réactif. Comme précédemment et pour les mêmes raisons, on privilégie une orientation perpendiculaire au plan équatorial du réacteur et une répartition à intervalles réguliers dans le bloc réactif.

On réalise ainsi un système qui, outre qu'il est aisément démontable, est aussi très efficace pour évacuer la chaleur produite par la réaction thermochimique. Or, on a vu que les performances de refroidissement sont essentielles pour obtenir un bon rendement de l'appareil. Cette fonction qui était antérieurement assurée par une ventilation électrique limitée, ponctuelle et sujette à dégradation dans l'environnement d'un réacteur thermochimique, est désormais assurée de manière sûre et efficace par le réacteur selon l'invention.

Dans ce cadre, il reste bien sûr possible d'utiliser un échangeur de chaleur classique par circulation de fluide, gaz ou liquide. Cependant, de manière préférée, les moyens de transfert thermique comprennent au moins un élément conducteur de chaleur contenant un fluide pur, aussi appelé caloduc. Un caloduc est destiné à transporter la chaleur grâce au principe du transfert thermique par transition de phase d'un fluide (chaleur latente). Son intérêt découle de sa faculté d'amplifier le refroidissement ou le chauffage en jouant sur l'équilibre permanent entre les phases liquide et vapeur, la création d'un mouvement de thermosiphon et des coefficients de transfert thermique très élevés pour transférer très rapidement la chaleur d'un point à un autre avec des surfaces d'échange thermique pouvant être réduites. De préférence, ledit fluide pur dudit caloduc est choisi parmi le pentane, le méthanol, l'éthanol.

Le réacteur contient un ou plusieurs blocs solides de milieu réactif. Selon une caractéristique avantageuse de l'appareil objet de la présente invention, le bloc de milieu réactif est constitué d'un matériau composite à base de graphite naturel expansé (GNE) et d'un sel réactif choisi par exemple parmi le chlorure de baryum (BaCl₂), le chlorure de calcium (CaCl₂), le chlorure de manganèse (MnCl₂), réagissant avec un fluide adéquat, par exemple avec l'ammoniac. D'autres sels réactifs peuvent également être utilisés, choisis notamment en fonction de leur enthalpie de réaction. L'homme du métier fera un choix judicieux d'un couple fluide - sels réactifs, réagissant avec un fluide changeant d'état à une température et une pression de travail désirées. Un milieu réactif composite de ce type est connu de l'homme du métier. Il est particulièrement bien adapté au dispositif selon l'invention, notamment du fait qu'il peut être doté des canaux destinés à recevoir des tubes de diffusion et de transfert thermique tels que décrits plus haut, par usinage, ou formé par pressage ou estampage ...

Également, selon une caractéristique avantageuse de l'appareil objet de la présente invention, ledit matériau composite a une structure en feuillets, lesquels sont disposés selon des surfaces concentriques suivant la forme du corps en calotte dans lequel le bloc est logé. On sait qu'on peut obtenir une structure en feuillets en mélangeant du GNE et un sel, puis en comprimant le tout dans une presse conçue à cet effet.

Comme expliqué précédemment, l'orientation des couches correspond à la direction privilégiée des transferts thermiques. Dans le mode de réalisation préféré, les feuillets étant incurvés comme la calotte, les transferts thermiques vont se faire essentiellement selon des parcours sphériques, vers le conduit principal rencontrant au passage les tubes de transfert thermique, pour une évacuation de la chaleur encore améliorée.

Cette structure en feuillets incurvés peut être obtenue selon l'invention, en réalisant la compression uniaxiale à froid du composite dans une presse à fond hémisphérique dont la taille correspondant à celle d'un corps hémisphérique du réacteur. Lorsque l'on utilise en outre un poinçon arrondi, on obtient un bloc hémisphérique présentant à sa base, un évidemment incurvé correspondant à la tête du poinçon, celui-ci pouvant avantageusement être à la dimension d'un cavité centrale de la chambre intermédiaire. L'épaisseur de composite graphite/sel est alors constante dans la totalité du réacteur.

Comme on le comprend à la lecture de ce qui précède, le système thermochimique selon l'invention offre des perfectionnements significatifs grâce à un réacteur ayant une architecture originale, simple et efficace, telle que les opérations de fabrication, de montage et de maintenance sont facilitées, avec une accessibilité aisée à l'ensemble des composants internes. Ce faisant son efficacité est accrue, par un choix de taille et donc de puissance, et des échanges chimiques et thermiques améliorés.

La présente invention sera mieux comprise, et des détails en relevant apparaîtront, grâce à la description qui va être faite de variantes de réalisation, en relation avec les figures annexées, dans lesquelles :
La fig.1 est une vue en perspective d'un réacteur sphérique appartenant à un appareil selon l'invention.
La fig. 2 est une vue en coupe du même réacteur sphérique.
La fig.3 est une vue en perspective d'un réacteur hémisphérique appartenant à un appareil selon l'invention.
La fig. 4 est une vue en coupe du même réacteur hémisphérique.

### EXEMPLE 1

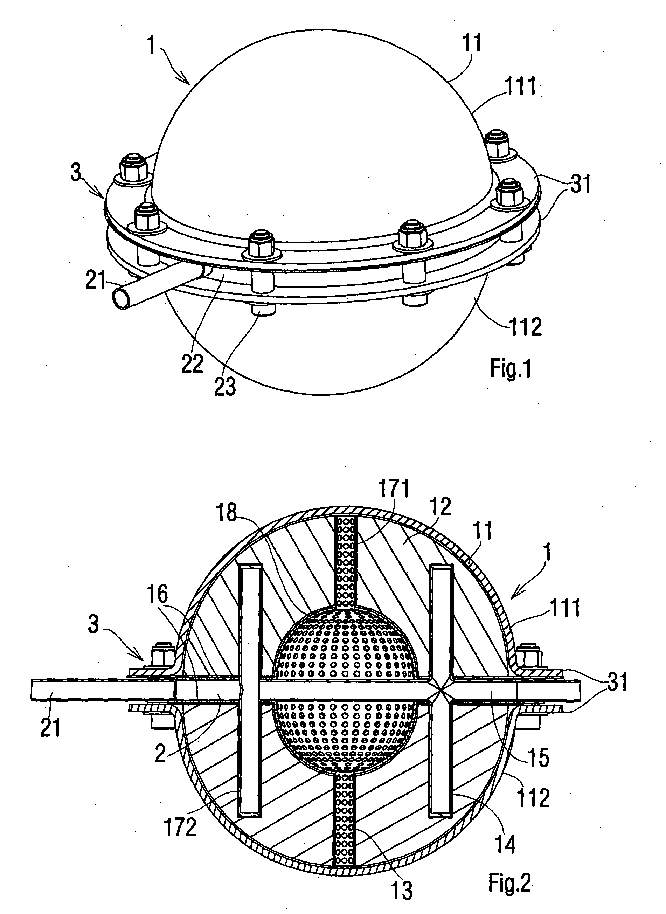

Sur les fig.1 et 2, on a représenté un réacteur thermochimique, appartenant à un appareil de chauffage et/ou de refroidissement d'un milieu extérieur à l'appareil. L'appareil comprend un réacteur 1, un réservoir (non représenté) contenant un fluide apte à changer d'état (liquide ou gazeux) dans une gamme déterminée de températures et de pressions, et des moyens de circulation du fluide gazeux entre le réacteur 1 et le réservoir.
Le réacteur 1 comprend deux corps hémisphériques 111, 112 assemblés par la bride périphérique 3 et s'ajustant l'un à l'autre pour former une enveloppe rigide définissant une enceinte. Le premier et le second corps 111, 112 comportent respectivement le premier et le second collets périphériques 31 s'étendant selon un plan équatorial, et constituant les mâchoires de la bride 3. Les collets périphériques 31 sont assemblées par des moyens de serrage 23 réversibles, en l'occurrence par des boulons et écrous.

L'enceinte renferme un milieu réactif apte à absorber et désorber le fluide à l'état gazeux, par exemple de l'ammoniac, par une réaction thermochimique. Le milieu réactif est fait par exemple en deux blocs 12 de matériau composite à base de graphite naturel expansé et de chlorure de baryum, épousant la forme générale des deux corps hémisphériques. Ce matériau composite a une structure en feuillets incurvés et concentriques suivant la forme respectivement des corps 111 et 112 dans lesquels les blocs 12 sont logés.

L'ammoniac gazeux circule entre le réservoir et le réacteur 1 grâce au conduit de communication 21 qui pénètre dans l'enceinte entre le premier et le second collets 31. Les collets 31 sont maintenus à distance par les lèvres d'entretoise 22 coopérant avec les moyens de serrage 23 pour assurer l'étanchéité du réacteur 1.

Le réacteur comporte des moyens de diffusion 13 dudit fluide gazeux dans et depuis le milieu réactif, qui sont constitués comme suit. Deux plaques perforées 16 s'étendent dans le plan équatorial des corps 111, 112 de sorte qu'elles séparent les blocs réactifs 12 de chacun des corps du réacteur 1. Les plaques perforées 16 sont fixées à distance l'une de l'autre au niveau du collet 31, de manière à ce que la chambre intermédiaire de diffusion 2 soit ménagée entre elles. Cette chambre 2 occupe une "tranche" du réacteur située dans un plan équatorial.

Les plaques perforées 16 de la chambre intermédiaire 2 comportent une pluralité de tubes perforés 171 (dont un seul est visible pour chaque plaque dans le plan de coupe de la fig. 2), qui s'étendent à l'intérieur des blocs 12 de milieu réactif. Elles comportent en outre une zone incurvée formant la cavité centrale 18 dans la chambre intermédiaire 2.

Les parois de l'ensemble de la chambre avec ses tubes et sa cavité, sont percées de micro-perforations, d'un diamètre pouvant aller de 10 µm à 100 µm.

Le réacteur comporte aussi des moyens de transfert thermique 14 entre le milieu réactif et le milieu extérieur. Ils comprennent un conduit 15 pénétrant dans l'enceinte entre le premier et le second collets 31. De ce fait, il pénètre dans la chambre intermédiaire 2, entre les deux plaques 16. Ce conduit comporte une pluralité de tubules 172 qui s'étendent à l'intérieur des blocs 12 de milieu réactif, après avoir traversé des orifices pratiqués dans les plaques perforées 16. L'ensemble constitue un élément conducteur de chaleur contenant un fluide pur, en l'occurrence du pentane qui est bien adapté aux gammes de températures souhaitées pour la réfrigération ou la climatisation, qui est peu corrosif et bon marché.

### EXEMPLE 2

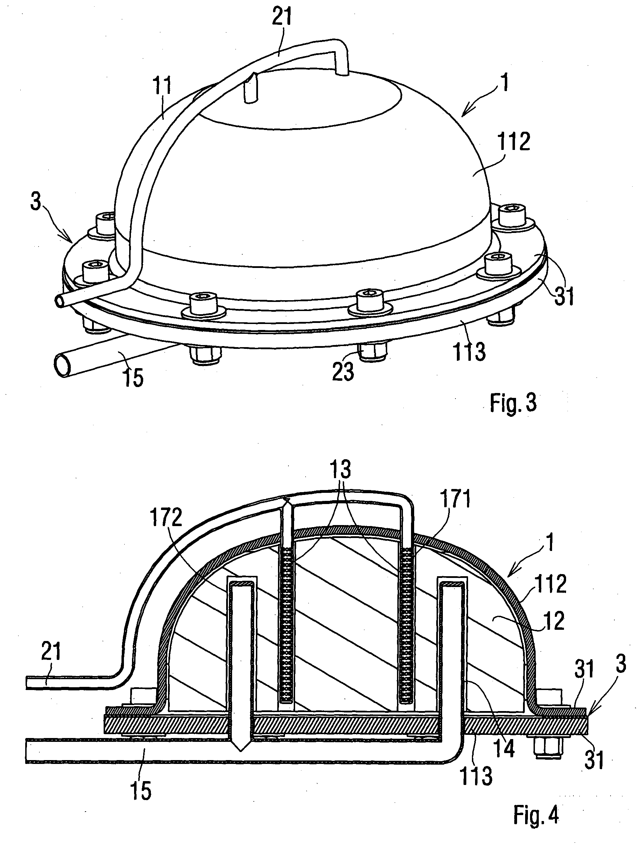

Sur les fig.3 et 4, on a représenté un autre réacteur thermochimique, appartenant à un appareil de chauffage et/ou de refroidissement d'un milieu extérieur à l'appareil. L'appareil comprend un réacteur 1, un réservoir (non représenté) contenant un fluide apte à changer d'état (liquide ou gazeux) dans une gamme déterminée de températures et de pressions, et des moyens de circulation du fluide gazeux entre le réacteur 1 et le réservoir.

Le réacteur 1 comprend un corps hémisphérique 112 et un corps plan, à savoir la platine 113, assemblés par la bride périphérique 3. Les corps 112 et 113 s'ajustent l'un à l'autre pour former une enveloppe rigide définissant l'enceinte du réacteur. Ils comportent respectivement le premier et le second collets périphériques 31 s'étendant selon un plan équatorial (définit par rapport au corps hémisphérique 112), et constituant les mâchoires de la bride 3. Les collets périphériques 31 sont assemblées jointivement par des moyens de serrage 23 réversibles, en l'occurrence par des boulons et des écrous.

L'enceinte renferme un milieu réactif apte à absorber et désorber le fluide à l'état gazeux, par exemple de l'ammoniac, par une réaction thermochimique. Le milieu réactif est fait d'un bloc 12 de matériau composite à base de graphite naturel expansé et de chlorure de baryum, épousant la forme générale du corps hémisphérique 112 et de la platine 113. Ce matériau composite a une structure en feuillets incurvés et concentriques suivant la forme du corps 112 dans lequel le bloc 12 est logé.

L'ammoniac gazeux circule entre le réservoir et le réacteur 1 grâce au conduit de communication 21 qui se divise en deux tubes 171, qui pénètrent dans l'enceinte à travers le corps hémisphérique 112 en deux endroits différents et s'étendant à l'intérieur du bloc 12 de milieu réactif. Les parois des tubes sont percées de micro-perforations, d'un diamètre pouvant aller de 10 µm à 100 µm.

Selon le même principe, les moyens de transfert thermique 14 entre le milieu réactif et le milieu extérieur comprennent un conduit 15 se divisant en deux tubes 172 qui pénètrent dans l'enceinte à travers la platine 113 en deux endroits différents et s'étendant selon différents axes à l'intérieur du bloc 12 de milieu réactif. L'ensemble constitue un élément conducteur de chaleur contenant un fluide pur, en l'occurrence du pentane.

## Revendications

1. Appareil de chauffage et/ou refroidissement d'un milieu contenu dans un compartiment extérieur audit appareil, comprenant i) un réacteur (1), ii) un réservoir contenant un fluide liquide ou gazeux apte à changer d'état dans une gamme déterminée de températures et de pressions, et iii) des moyens de circulation du fluide gazeux entre le réacteur (1) et le réservoir,
ledit réacteur comprenant :
- une enveloppe rigide définissant une enceinte qui renferme un milieu réactif apte à absorber et désorber ledit fluide à l'état gazeux par une réaction thermochimique,
- des moyens de diffusion (13) dudit fluide gazeux dans et depuis ledit milieu réactif,
- des moyens de transfert thermique (14) entre ledit milieu réactif et ledit milieu extérieur, l'enveloppe du réacteur (1) étant formée de deux corps (11) assemblés par une bride périphérique (3), l'appareil étant **caractérisé en ce qu'**au moins le premier corps (11) adopte la forme générale d'une calotte de section droite circulaire ou quasiment circulaire qui contient ledit milieu réactif sous la forme d'au moins un bloc (12) épousant la forme générale de ladite calotte.

2. Appareil selon la revendication 1, **caractérisé en ce que** le premier et le second corps (11) comportent respectivement un premier et un second collets périphériques (31) s'étendant selon un plan équatorial pour constituer les mâchoires de la bride (3) qui sont assemblées par des moyens de serrage (23) réversibles.

3. Appareil selon l'une des revendications 1 ou 2, **caractérisé en ce que** les moyens de circulation du fluide gazeux entre le réservoir et le réacteur (1) comprennent un conduit de communication (21) pénétrant dans l'enceinte entre le premier et le second collets (31), lesquels sont maintenus à distance par des lèvres d'entretoise (22) coopérant avec les moyens de serrage (23).

4. Appareil selon l'une des revendications 1 ou 2, **caractérisé en ce que** les moyens de transfert thermique (14) entre le milieu réactif et le milieu extérieur, comprennent un conduit (15) pénétrant dans l'enceinte entre le premier et le second collets (31), lesquels sont maintenus à distance par des lèvres d'entretoise (22) coopérant avec les moyens de serrage (23).

5. Appareil selon l'une des revendications 1 ou 2, **caractérisé en ce que** les moyens de circulation du fluide gazeux entre le réservoir et le réacteur (1) comprennent un conduit de communication (21) se divisant en une pluralité de tubes (171), et les moyens de transfert thermique (14) entre le milieu réactif et le milieu extérieur comprennent un conduit de transfert thermique (15) se divisant en une pluralité de tubes (172), lesdits tubes (171, 172) pénétrant dans l'enceinte à travers l'enveloppe en différents endroits et s'étendant selon différents axes à l'intérieur dudit au moins un bloc (12) de milieu réactif.

6. Appareil selon l'une des revendications 1 à 5, **caractérisé en ce que** le second corps (113) est sous la forme d'une platine circulaire s'ajustant au premier corps.

7. Appareil selon l'une quelconque des revendications 1 à 5, **caractérisé en ce que** le second corps (112) adopte la forme générale d'une calotte de section droite circulaire ou quasiment circulaire contenant un milieu réactif formé d'au moins un blocs (12) épousant ladite forme générale en calotte, le premier corps (111) et le second corps (112) s'ajustant l'un à l'autre.

8. Appareil selon la revendication précédente, **caractérisé en ce que** les moyens de diffusion (13) du fluide gazeux comprennent deux plaques perforées (16) s'étendant dans le plan équatorial desdits corps (111, 112) en forme de calotte et séparant les blocs réactifs (12) de chacun desdits corps du réacteur (1), les plaques perforées (16) étant fixées à distance l'une de l'autre de manière à ménager entre elles une chambre intermédiaire de diffusion (2).

9. Appareil selon la revendication précédente, **caractérisé en ce que** les plaques perforées (16) de la chambre intermédiaire (2) comportent une pluralité de tubes perforés (171) qui s'étendent à l'intérieur desdits blocs (12) de milieu réactif.

10. Appareil selon l'une des revendications 8 ou 9, **caractérisé en ce que** les plaques perforées (16) comportent une zone incurvée formant une cavité centrale (18) dans la chambre intermédiaire (2).

11. Appareil selon l'une des revendications 8 à 10, **caractérisé en ce que** les moyens de transfert thermique comportent une pluralité de tubules (172) qui s'étendent par des orifices pratiqués dans lesdites plaques perforées (16) à l'intérieur desdits blocs (12) de milieu réactif.

12. Appareil selon la revendication précédente, **caractérisé en ce que** les moyens de transfert thermique consistent en au moins un élément conducteur de chaleur contenant un fluide pur, ou caloduc.

13. Appareil selon l'une quelconque des revendications précédentes, **caractérisé en ce que** le bloc (12) de milieu réactif est constitué d'un matériau composite à base de graphite naturel expansé et d'un sel réactif, ledit matériau composite ayant une structure en feuillets qui sont disposés selon des surfaces concentriques suivant la forme du corps (11) en calotte dans lequel le bloc (12) est logé.

## Patentansprüche

1. Einrichtung zum Erwärmen und/oder Abkühlen eines Mediums, das in einem Fach außerhalb der Einrichtung enthalten ist, umfassend i) einen Reaktor (1), ii) einen Behälter, der ein flüssiges oder gasförmiges Fluid enthält, das imstande ist, den Zustand innerhalb eines bestimmten Temperatur- und Druckbereichs zu ändern, und iii) Mittel für die Zirkulation des gasförmigen Fluids zwischen dem Reaktor (1) und dem Behälter,
wobei der Reaktor umfasst:
- eine starre Hülle, die ein Gehäuse definiert, das ein reaktives Medium einschließt, das imstande ist, das Fluid im gasförmigen Zustand durch eine thermochemische Reaktion zu absorbieren und desorbieren,
- Mittel zur Diffusion (13) des gasförmigen Fluids in und aus dem reaktiven Medium,
- Mittel zur Wärmeübertragung (14) zwischen dem reaktiven Medium und dem Außenmedium, wobei die Hülle des Reaktors (1) von zwei Körpern (11) gebildet wird, die durch einen umlaufenden Flansch (3) zusammengefügt werden, wobei die Einrichtung **dadurch gekennzeichnet ist, dass** mindestens der erste Körper (11) die allgemeine Form eines Kugelsegments mit kreisförmigem oder so gut wie kreisförmigem, geraden Querschnitt annimmt, welches das reaktive Medium in Form mindestens eines Blocks (12) enthält, der sich an die allgemeine Form des Kugelsegments anpasst.

2. Einrichtung nach Anspruch 1, **dadurch gekennzeichnet, dass** der erste und der zweite Körper (11) jeweils einen ersten und einen zweiten umlaufenden Kragen (31) umfassen, die sich gemäß einer Äquatorialebene erstrecken, um die Klemmbacken des Flansches (3) zu bilden, die durch reversible Klemmmittel (23) zusammengefügt sind.

3. Einrichtung nach einem der Ansprüche 1 oder 2, **dadurch gekennzeichnet, dass** die Mittel für die Zirkulation des gasförmigen Fluids zwischen dem Behälter und dem Reaktor (1) eine Kommunikationsleitung (21) umfassen, die in das Gehäuse zwischen dem ersten und dem zweiten Kragen (31) eindringt, die von Distanzlippen (22) beabstandet gehalten werden, die mit den Klemmmitteln (23) zusammenwirken.

4. Einrichtung nach einem der Ansprüche 1 oder 2, **dadurch gekennzeichnet, dass** die Mittel zur Wärmeübertragung (14) zwischen dem reaktiven Medium und dem Außenmedium eine Leitung (15) umfassen, die in das Gehäuse zwischen dem ersten und dem zweiten Kragen (31) eindringt, die von Distanzlippen (22) beabstandet gehalten werden, die mit den Klemmmitteln (23) zusammenwirken.

5. Einrichtung nach einem der Ansprüche 1 oder 2, **dadurch gekennzeichnet, dass** die Mittel für die Zirkulation des gasförmigen Fluids zwischen dem Behälter und dem Reaktor (1) eine Kommunikationsleitung (21) umfassen, die sich auf eine Vielzahl von Rohren (171) aufteilt, und die Mittel zur Wärmeübertragung (14) zwischen dem reaktiven Medium und dem Außenmedium eine Wärmeübertragungsleitung (15) umfassen, die sich auf eine Vielzahl von Rohren (172) aufteilt, wobei die Rohre (171, 172) in das Gehäuse durch die Hülle an verschiedenen Stellen eindringen und sich gemäß verschiedenen Achsen im Inneren des mindestens einen Blocks (12) des reaktiven Mediums erstrecken.

6. Einrichtung nach einem der Ansprüche 1 bis 5, **dadurch gekennzeichnet, dass** der zweite Körper (113) die Form einer kreisförmigen Platine aufweist, die sich an den ersten Körper anpasst.

7. Einrichtung nach einem der Ansprüche 1 bis 5, **dadurch gekennzeichnet, dass** der zweite Körper (112) die allgemeine Form eines Kugelsegments mit kreisförmigem oder so gut wie kreisförmigem, geraden Querschnitt annimmt, welches ein reaktives Medium enthält, das von mindestens einem Block (12) gebildet wird, der sich an die allgemeine Form des Kugelsegments anpasst, wobei sich der erste Körper (111) und der zweite Körper (112) zueinander anpassen.

8. Einrichtung nach dem vorstehenden Anspruch, **dadurch gekennzeichnet, dass** die Mittel zur Diffusion (13) des gasförmigen Fluids zwei perforierte Platten (16) umfassen, die sich in der Äquatorialebene der Körper (111, 112) in Kugelsegmentform erstrecken und die reaktiven Blöcke (12) jedes der Körper des Reaktors (1) trennen, wobei die perforierten Platten (16) voneinander beabstandet fixiert sind, sodass sie dazwischen eine Diffusionszwischenkammer (2) einrichten.

9. Einrichtung nach dem vorstehenden Anspruch, **dadurch gekennzeichnet, dass** die perforierten Platten (16) der Zwischenkammer (2) eine Vielzahl von perforierten Rohren (171) umfassen, die sich im Inneren der Blöcke (12) des reaktiven Mediums erstreckt.

10. Einrichtung nach einem der Ansprüche 8 oder 9, **dadurch gekennzeichnet, dass** die perforierten Platten (16) einen gekrümmten Bereich umfassen, der einen zentralen Hohlraum (18) in der Zwischenkammer (2) bildet.

11. Einrichtung nach einem der Ansprüche 8 bis 10, **dadurch gekennzeichnet, dass** die Wärmeübertragungsmittel eine Vielzahl von Röhrchen (172) umfassen, die sich durch Öffnungen erstreckt, die in den perforierten Platten (16) im Inneren der Blöcke (12) des reaktiven Mediums ausgeführt sind.

12. Einrichtung nach dem vorstehenden Anspruch, **dadurch gekennzeichnet, dass** die Wärmeübertragungsmittel aus mindestens einem Wärmeleitelement, das ein Fluid enthält, oder einem Wärmerohr bestehen.

13. Einrichtung nach einem der vorstehenden Ansprüche, **dadurch gekennzeichnet, dass** der Block (12) des reaktiven Mediums von einem Verbundmaterial auf Basis von expandiertem Naturgraphit und eines reaktiven Salzes gebildet wird, wobei das Verbundmaterial eine blättrige Struktur aufweist, wobei die Blätter gemäß konzentrischen Oberflächen entsprechend der Form des Körpers (11) als Kugelsegment angeordnet sind, in dem der Block (12) untergebracht ist.

## Claims

1. An apparatus for heating and/or cooling a medium contained in a compartment external to said apparatus, comprising i) a reactor (1), ii) a reservoir containing a liquid or gaseous fluid capable of changing state in a determined range of temperatures and of pressures, and iii) means of circulating the gaseous fluid between the reactor (1) and the reservoir,
said reactor comprising:
- a rigid enclosure defining a vessel which contains a reactive medium able to absorb and desorb said fluid in the gaseous state through a thermochemical reaction,
- diffusing means (13) for diffusing said gaseous fluid into and from said reactive medium,
- heat-transfer means (14) for transferring heat between said reactive medium and said external medium,
the enclosure of the reactor (1) being formed of two bodies (11) assembled by a peripheral flanged joint (3), the apparatus being **characterized in that** at least the first body (11) adopts the overall shape of a cap of circular or near-circular cross section which contains said reactive medium in the form of at least one block (12) conforming to the overall shape of said cap.

2. The apparatus as claimed in claim 1, **characterized in that** the first and the second bodies (11) respectively comprise a first and a second peripheral flange (31) extending in an equatorial plane to constitute the halves of the flanged joint (3) which are assembled by reversible clamping means (23).

3. The apparatus as claimed in one of claims 1 or 2, **characterized in that** the means of circulating the gaseous fluid between the reservoir and the reactor (1) comprise a communication pipe (21) entering the vessel between the first and the second flanges (31), which are held apart by spacer lips (22) collaborating with the clamping means (23).

4. The apparatus as claimed in one of claims 1 or 2, **characterized in that** the heat-transfer means (14) for transferring heat between the reactive medium and the external medium comprise a pipe (15) entering the vessel between the first and the second flanges (31) which are held apart by spacer lips (22) collaborating with the clamping means (23).

5. The apparatus as claimed in one of claims 1 or 2, **characterized in that** the means of circulating the gaseous fluid between the reservoir and the reactor (1) comprise a communication pipe (21) that splits into a plurality of tubes (171), and the heat-transfer means (14) for transferring heat between the reactive medium and the external medium comprise a heat-transfer pipe (15) that splits into a plurality of tubes (172), said tubes (171, 172) entering the vessel through the enclosure at various locations and extending along various axes inside said at least one block (12) of reactive medium.

6. The apparatus as claimed in any one of claims 1 to 5, **characterized in that** the second body (113) is in the form of a circular plate fitting the first body.

7. The apparatus as claimed in any one of claims 1 to 5, **characterized in that** the second body (112) adopts the overall shape of a cap of circular or near-circular cross section containing a reactive medium formed of at least one block (12) conforming to said overall shape of a cap, the first body (111) and the second body (112) fitting together.

8. The apparatus as claimed in the preceding claim, **characterized in that** the diffusion means (13) for diffusing the gaseous fluid comprise two perforated sheets (16) extending in the equatorial plane of said cap-shaped bodies (111, 112) and separating the reactive blocks (12) of each of said bodies of the reactor (1), the perforated sheets (16) being fixed some distance apart so as to form an intermediate diffusion chamber (2) between them.

9. The apparatus as claimed in the preceding claim, **characterized in that** the perforated sheets (16) of the intermediate chamber (2) comprise a plurality of perforated tubes (171) which extend inside said blocks (12) of reactive medium.

10. The apparatus as claimed in one of claims 8 or 9, **characterized in that** the perforated sheets (16) comprise a curved zone forming a central cavity (18) in the intermediate chamber (2).

11. The apparatus as claimed in one of claims 8 to 10, **characterized in that** the heat-transfer means comprise a plurality of tubules (172) which extend through openings made in said perforated sheets (16) into said blocks (12) of reactive medium.

12. The apparatus as claimed in the preceding claim, **characterized in that** the heat-transfer means consist of at least one heat-conducting element containing a pure fluid, or heat pipe.

13. The apparatus as claimed in any one of the preceding claims, **characterized in that** the block (12) of reactive medium is made of a composite material based on expanded natural graphite and a reactive salt, said composite material having a layered structure with the layers arranged along concentric surfaces that follow the shape of the cap-shaped body (11) in which the block (12) is housed.
